# EUROPEAN PATENT APPLICATION

(11) **EP 4 718 764 A1**
(43) Date of publication of application: **01.04.2026**
(21) Application number: 23937916.7
(22) Date of filing: 23.05.2023
(51) Int. Cl.: H04L 5/00, H04W 8/24

(54) **INFORMATION TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2023/095828
(87) International publication number: WO 2024/239241

(57) **Abstract**

Provided in the embodiments of the present disclosure are an information transmission method and apparatus, and a communication device and a storage medium. The information transmission method, which is executed by means of a terminal, comprises: sending to a network device first information related to in-channel selectivity capability of a terminal. By means of the embodiments of the present disclosure, more rational scheduling can be carried out for terminal, such that the communication performance can be improved.

## Description

### TECHNICAL FIELD

The present disclosure relates to but is not limited to the field of wireless communication technologies, and in particular, to an information transmission method and apparatus, a communication device, and a storage medium.

### BACKGROUND

In the field of communication technologies, to further improve spectrum utilization efficiency and reduce a service latency, a full-duplex technology becomes a hot research direction.

### SUMMARY

Embodiments of the present disclosure provide an information transmission method and apparatus, a communication device and a storage medium.

According to a first aspect of the embodiments of the present disclosure, an information transmission method is provided, performed by a terminal, including:
sending first information related to in-channel selectivity (ICS) capability of the terminal to a network device.

According to a second aspect of the embodiments of the present disclosure, an information transmission method is provided, performed by a network device, including:
receiving first information, sent by a terminal, related to in-channel selectivity capability of the terminal.

According to a third aspect of the embodiments of the present disclosure, an information transmission apparatus is provided, applied to a terminal, including:
a sending module, configured to send first information related to in-channel selectivity capability of the terminal to a network device.

According to a fourth aspect of the embodiments of the present disclosure, an information transmission apparatus is provided, applied to a network device, including:
a receiving module, configured to receive first information, sent by a terminal, related to in-channel selectivity capability of the terminal.

According to a fifth aspect of the embodiments of the present disclosure, a communication system is provided, including:
a terminal, configured to perform the information transmission method according to the first aspect; and
a network device, configured to perform the information transmission method according to the second aspect.

According to a sixth aspect of the embodiments of the present disclosure, a communication device is provided, including one or more processors, a memory, and an executable program stored in the memory and executable by the one or more processors, where when executing the executable program, the one or more processors are caused to perform the information transmission method according to the first aspect or the second aspect.

According to a seventh aspect of the embodiments of the present disclosure, a computer storage medium is provided, where the computer storage medium stores an executable program; and when the executable program is executed by a processor, the information transmission method provided in the first aspect or the second aspect is implemented.

Embodiments of the present disclosure provide an information transmission method and apparatus, a communication device and a storage medium. In some embodiments, terms such as the information transmission method, the communication method, and the information processing method may be replaced with each other, terms such as the information transmission apparatus, the communication apparatus, and the information processing apparatus may be replaced with each other, and terms such as the communication system and the information processing system may be replaced with each other.

According to the technical solution provided in the embodiments of the present disclosure, the terminal sends the first information related to the in-channel selectivity capability of the terminal to the network device. In this way, the network device can perform more proper scheduling on the terminal based on the first information related to the in-channel selectivity capability of the terminal, thereby improving communication performance.

It shall be noted that the above general description and the following detailed description are examples and explanatory only and are not restrictive of the embodiments of the present disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the embodiments of the present disclosure.
FIG. 1 is a schematic structural diagram of a wireless communication system according to an example embodiment.
FIG. 2A is a schematic diagram of information transmission in a duplex mode according to an example embodiment.
FIG. 2B is a schematic diagram of information transmission in a full duplex mode according to an example embodiment.
FIG. 2C is a schematic diagram of mutual interference between terminals in a full-duplex mode according to an example embodiment.
FIG. 3 is a schematic flowchart of an information transmission method according to an example embodiment.
FIG. 4 is a schematic flowchart of an information transmission method according to an example embodiment.
FIG. 5 is a schematic flowchart of an information transmission method according to an example embodiment.
FIG. 6 is a schematic flowchart of an information transmission method according to an example embodiment.
FIG. 7 is a schematic flowchart of an information transmission method according to an example embodiment.
FIG. 8 is a schematic flowchart of an information transmission method according to an example embodiment.
FIG. 9 is a schematic flowchart of an information transmission method according to an example embodiment.
FIG. 10 is a schematic flowchart of an information transmission method according to an example embodiment.
FIG. 11 is a schematic diagram of ICS of a terminal according to an example embodiment.
FIG. 12 is a schematic structural diagram of an information transmission apparatus according to an example embodiment.
FIG. 13 is a schematic structural diagram of an information transmission apparatus according to an example embodiment.
FIG. 14 is a schematic structural diagram of a UE according to an example embodiment.
FIG. 15 is a schematic structural diagram of a communication device according to an example embodiment.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations set forth in the following description of example embodiments do not represent all implementations consistent with the embodiments of the present disclosure. On the contrary, they are merely examples of apparatuses and methods consistent with some aspects of the embodiments of the present disclosure.

The terminology used in the embodiments of the present disclosure is for the purpose of describing particular embodiments only and is not intended to limit the embodiments of the present disclosure. The singular forms "a", "said" and "the" used in the present disclosure are also intended to include plural forms, unless the context clearly indicates otherwise. It will also be understood that the term "and/or" as used herein refers to and encompasses any and all possible combinations of one or more associated listed items.

It should be understood that although the terms "first", "second", "third", etc., may be used to describe various information in the embodiments of the present disclosure, these information should not be limited to these terms. These terms are only used to distinguish a same type of information from each other. For example, without departing from the scope of the embodiments of the present disclosure, "first information" may also be referred to as "second information", and similarly, "second information" may also be referred to as "first information". Depending on the context, the word "if" as used herein may be interpreted as "when" or "upon" or "in response to determining".

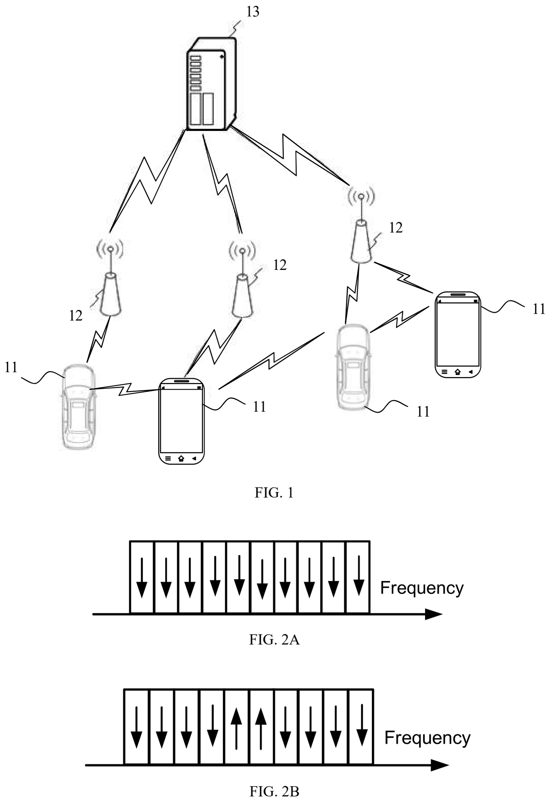

Referring to FIG. 1, FIG. 1 is a schematic structural diagram of a wireless communication system according to an embodiment of the present disclosure. As shown in FIG. 1, the wireless communication system is a communication system based on a cellular mobile communication technology, and the wireless communication system may include: several user equipments 11 and several access network devices 12.

The user equipment 11 may include a device that provides voice and/or data connectivity to a user. The user equipment 11 may communicate with one or more core networks through a radio access network (RAN), and the user equipment 11 may be Internet of Things user equipment, such as a sensor device, a mobile phone (or referred to as a "cellular" phone), and a computer having Internet of Things user equipment, for example, may be a fixed, portable, pocket-sized, handheld, computer built-in, or vehicle-mounted apparatus. For example, a station (STA), a subscriber unit, a subscriber station, a mobile station, a mobile, a remote station, an access point, remote user equipment (remote terminal), access user equipment (access terminal), a user device (user terminal), a user agent, a user device, or user equipment. Alternatively, the user equipment 11 may include a wearable device, a virtual reality (VR) device, an augmented reality (AR) device, or a VR/AR hybrid headset device. Alternatively, the user equipment 11 may include a device of an unmanned aerial vehicle. Alternatively, the user equipment 11 may include a vehicle-mounted device, for example, may be a vehicle computer having a wireless communication function, or a wireless user equipment externally connected to a vehicle computer. Alternatively, the user equipment 11 may include a roadside device, for example, a street lamp, a signal light, or another roadside device that has a wireless communication function.

The access network device 12 may include a device configured to communicate with the user equipment 11 in a wireless communication system, which may include a base station, an access point, or a network device, or may include a device that communicates with a wireless terminal through one or more sectors on an air interface in an access network. The network device may be configured to mutually convert a received over-the-air frame and an IP packet, and serve as a router between the wireless terminal and a remaining part of the access network, where the remaining part of the access network may include an Internet Protocol (IP) network. The network device may also coordinate attribute management for the air interface. The wireless communication system may be a fourth generation mobile communication (4G) system, also referred to as a long term evolution (LTE) system; or the wireless communication system may be a 5G system, also referred to as a new radio (NR) system or a 5G NR system. Alternatively, the wireless communications system may include still another next generation system of the 5G system. The access network in the 5G system may be referred to as a NG-RAN (New Generation-Radio Access Network).

The access network device 12 may include an evolved access device (eNB) used in a 4G system. Alternatively, the access network device 12 may include an access device (gNB) that uses a centralized and distributed architecture in a 5G system. When the access network device 12 uses a centralized and distributed architecture, the access network device 12 usually includes a central unit (CU) and at least two distributed units (DU). A protocol stack of a packet data convergence protocol (PDCP) layer, a radio link control (RLC) protocol layer, and a media access control (MAC) layer is disposed in the central unit, a protocol stack of a physical (PHY) layer is disposed in the distributed unit, and a specific implementation of the access network device 12 is not limited in the embodiments of the present disclosure.

A wireless connection may be established between the access network device 12 and the user equipment 11 through a wireless air interface. In different implementations, the wireless air interface is a wireless air interface based on a 4th generation mobile communication network technology (4G) standard; or the wireless air interface is a wireless air interface based on a 5th generation mobile communication network technology (5G) standard, for example, the wireless air interface is a new air interface; or the wireless air interface may be a wireless air interface based on a 5th generation mobile communications network technology standard.

In some embodiments, an E2E (End to End) or D2D (Device to device) connection may be further established between the user equipments 11. For example, a scenario such as vehicle-to-vehicle (V2V) communication, vehicle-to-infrastructure (V2I) communication, and vehicle-to-pedestrian (V2P) communication in vehicle-to-everything (V2X) communication.

In some embodiments, the wireless communication system may further include a core network device 13. The several access network devices 12 are connected to the core network device 13 respectively.

In some embodiments, the core network device 13 may be a mobility management entity (MME) in an evolved packet core (EPC). Alternatively, the core network device may be a serving gateway (SGW), a public data network gateway (PGW), a policy and charging rules function (PCRF), a home subscriber server (HSS), etc.

In some embodiments, the core network device 13 may include one or more network elements, for example, an access and mobility management function (AMF), a session management function (SMF), a user plane function (UPF), a policy control function (PCF), and a network repository function (NRF) entity.

In order to facilitate understanding by those skilled in the art, the embodiments of the present disclosure enumerate a plurality of implementations to clearly illustrate the technical solutions of the embodiments of the present disclosure. Of course, those skilled in the art can understand that a plurality of embodiments provided by the embodiments of the present disclosure may be executed separately, or may be executed in combination with methods of other embodiments in the embodiments of the present disclosure, or may be executed separately or in combination with some methods in other related technologies.

In the embodiments of the present disclosure, unless otherwise specified and subjected to logical conflict, terms and/or descriptions in the embodiments are consistent and may be mutually referenced, and technical features in different embodiments may be combined based on an internal logical relationship thereof to form a new embodiment.

The terms used in the embodiments of the present disclosure are only for the purpose of describing specific embodiments, and are not intended to limit the present disclosure.

In related arts, when a network side operates in a full-duplex mode, the network side may simultaneously perform data reception and transmission operations by using at least partially overlapping time and frequency resources; and the terminal usually can only receive or transmit data on the same time-frequency resource.

In order to further improve the spectrum utilization efficiency and reduce the service latency, the full-duplex technology has become a hot research direction, and has started its standard research work in the 3rd Generation Partnership Project (3GPP) specification.

FIG. 2A is a schematic diagram of information transmission in a duplex mode. As shown in FIG. 2A, for example, on a downlink (DL) symbol, an entire bandwidth can only be used for downlink transmission. Downward arrows indicate downlink transmission.

FIG. 2B is a schematic diagram of information transmission in a full-duplex mode. As shown in FIG. 2B, for example, on a downlink symbol, some of the sub-blocks within the bandwidth may be used for uplink (UL) transmission. Upward arrows represent uplink transmission, and downward arrows represent downlink transmission.

In the embodiments of the present disclosure, in order to make good use of the full-duplex technology, the problem of interference between uplink and downlink transmission needs to be overcome.

For example, at the base station side, it is necessary to overcome interference from downlink transmission to uplink reception within the same frequency band. At the terminal side, it is necessary to overcome interference from uplink transmissions of other terminals to downlink reception of this terminal within the same frequency band.

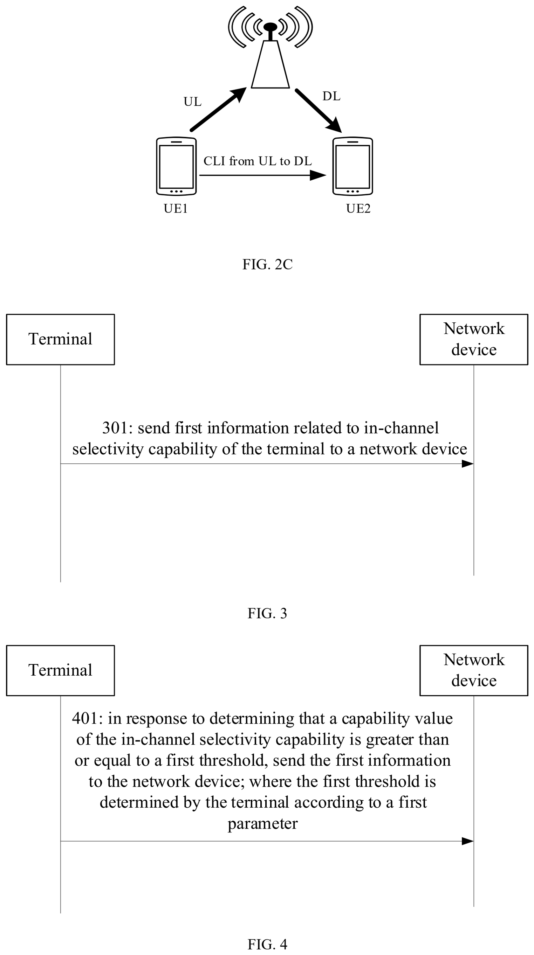

FIG. 2C is a schematic diagram of mutual interference between terminals in a full-duplex mode. In the full-duplex mode, the UE2 subjecting to downlink transmission may be interfered by the UE1 performing uplink transmission on the same frequency. As shown in FIG. 2C, the UL of the UE1 causes cross link interference (CLI) to the DL of the UE2.

In the present embodiment, the interference level to UE2 depends on a distance between UE1 and UE2, and also depends on the in-channel selectivity capability (also referred to as "in-band selectivity capability") of UE2. If the in-channel selectivity capability of UE2 is strong, the UL of the UE1 causes less CLI interference to the DL of the UE2.

In the present embodiment, the in-channel selectivity (ICS) capability of the terminal refers to a capability of a receiver to receive a desired signal on an allocated resource block (RB) in a case that an interference signal (for example, a strong interference signal) exists in an operating bandwidth of the terminal. The in-channel selectivity capability of the terminal may be obtained by testing the terminal according to a test configuration.

In the present embodiment, terms such as in-channel selectivity capability and in-band selectivity capability, in-channel selectivity, and in-band selectivity may be replaced with each other; and terms such as terminal, terminal device, and user equipment (UE) may be replaced with each other.

FIG. 3 is a flowchart of an information transmission method according to an example embodiment. The information transmission method is performed by a terminal. As shown in FIG. 3, the information transmission method may include a following step 301.

In step 301, sending first information related to in-channel selectivity capability of the terminal to a network device.

In some examples, the network device may include a base station, and the base station may include, for example, a gNB or an eNB.

In some examples, the terminal may be located in a cell covered by the network device, and the terminal may be various mobile terminals or fixed terminals, for example, may include but is not limited to a mobile phone, a wearable device, or an Internet of Things device.

In some examples, a greater in-channel selectivity capability of the terminal indicates a stronger interference suppression capability of the terminal.

For example, when a first cell in which a terminal is located is in a full-duplex mode, a greater in-channel selectivity capability of the terminal indicates a stronger capability of the terminal to suppress interference from uplink transmission of another terminal in the first cell when the terminal performs downlink transmission.

In some examples, the first information may indicate whether the terminal has in-channel selectivity capability.

In some other examples, the first information may indicate the terminal has in-channel selectivity capability.

In some other examples, the first information may indicate whether the terminal has in-channel selectivity capability with a capability value greater than a first threshold.

For example, the first threshold may be agreed in a protocol or provided by the network device.

In some examples, the terminal sends the first information to the network device in an implicit manner.

In an example, the terminal may send the first information to the network device by using a first resource, where the first resource indicates the first information.

For example, the first resource may include a specific uplink resource preconfigured by the network device for the terminal.

For example, the first resource may include a specific resource used by the terminal to perform random access. The terminal may send a random access message in a random access process, where a first resource used by the random access message indicates the first information related to in-channel selectivity capability of the terminal.

In an example, the first resource includes at least one of a frequency-domain resource or a time-domain resource.

In an example, the frequency-domain resource includes at least one of a frequency-domain position, a frequency-domain offset, or a frequency hopping parameter.

In an example, the time-domain resource includes at least one of a start symbol location, a number of symbols, or a repetition factor.

In some examples, different first resources indicate different in-channel selectivity capability of terminals.

For example, the first resource may include a first specific resource and a second specific resource, and in-channel selectivity capability of the terminal indicated by the first specific resource is lower than in-channel selectivity capability of the terminal indicated by the second specific resource.

For example, the first specific resource may indicate in-channel selectivity capability with a capability value greater than or equal to a first threshold, and the second specific resource may indicate in-channel selectivity capability with a capability value less than the first threshold.

In some examples, the terminal sends the first information related to the in-channel selectivity capability of the terminal to the network device in an explicit manner.

For example, the terminal sends a random access message to the network device, where the random access message carries the first information related to the in-channel selectivity capability of the terminal.

In some examples, when the terminal is in a radio resource control (RRC) connected state, the terminal may send, to the network device, the first information related to the in-channel selectivity capability of the terminal.

In some examples, in a case of primary and secondary cell change or cell handover, the terminal may send, to the network device, the first information related to the in-channel selectivity capability of the terminal.

In some examples, the terminal may send the first information related to the in-channel selectivity capability of the terminal to the network device based on indication information sent by the network device, where the indication information instructs the terminal to report the first information.

For example, the indication information may include RRC signaling, medium access control (MAC) control element (CE) signaling, or downlink control information (DCI) signaling.

In the embodiments of the present disclosure, the terminal sends the first information related to the in-channel selectivity capability of the terminal to the network device. In this way, the network device can perform more proper scheduling on the terminal based on the first information related to the in-channel selectivity capability of the terminal, thereby improving communication performance.

In an embodiment, the first information includes any one of:
a first indication, indicating that the terminal has the in-channel selectivity capability;
a second indication, indicating a capability range of the in-channel selectivity capability of the terminal; and
a third indication, indicating a capability value of the in-channel selectivity capability of the terminal.

In some examples, the first information includes the first indication, and the first indication may indicate, by using a first preset number of bits, whether a capability value of in-channel selectivity capability of the terminal exceeds a first threshold.

For example, the first preset number of bits is one bit. A bit taking a value of "1" indicates that the capability value of the in-channel selectivity capability of the terminal is greater than or equal to the first threshold; or a bit taking a value of "0" indicates that the capability value of the in-channel selectivity capability of the terminal is less than the first threshold.

In some examples, when the capability value of the in-channel selectivity capability is greater than or equal to the first threshold, the in-channel selectivity capability may be referred to as a "high in-channel selectivity capability"; and when the capability value of the in-channel selectivity capability is less than the first threshold, the in-channel selectivity capability may be referred to as a "low in-channel selectivity capability".

In some examples, the first information includes the second indication, and the second indication may indicate the capability range of the in-channel selectivity capability of the terminal by using a second preset number of bits.

For example, the terminal may determine bit information corresponding to a capability range to which in-channel selectivity capability of the terminal belongs based on a prestored correspondence between bit information and in-channel selectivity capability ranges, and send the bit information as the second indication to the network device. The correspondence may be agreed in a protocol, or may be sent by the network device to the terminal.

For example, the second preset number of bits is two bits, where the two bits taking a value of "00" indicates that the capability range of the in-channel selectivity capability of the terminal is a first capability range, and the two bits taking a value of "01" indicates that the capability range of the in-channel selectivity capability of the terminal is a second capability range, and the two bits taking a value of "10" indicates that the capability range of the in-channel selectivity capability of the terminal is a third capability range. An upper limit of the first capability range is lower than a lower limit of the second capability range, and an upper limit of the second capability range is lower than a lower limit of the third capability range.

In some examples, the first information includes the third indication, and the third indication may include a capability value of in-channel selectivity capability of the terminal. The capability value of the in-channel selectivity capability is an actual in-channel selectivity capability value obtained by testing the terminal.

In the present embodiment of the present disclosure, the terminal sends the first indication, the second indication, or the third indication to the network device, so that the network device can determine the in-channel selectivity capability of the terminal based on the indication information sent by the terminal, to more properly schedule the terminal based on the in-channel selectivity capability of the terminal, thereby improving communication performance.

In an embodiment, as shown in FIG. 4, in step 301, sending the first information related to in-channel selectivity capability of the terminal to the network device may include a following step 401.

In step 401, in response to determining that a capability value of the in-channel selectivity capability is greater than or equal to a first threshold, sending the first information to the network device; where the first threshold is determined by the terminal according to a first parameter.

In some examples, the first parameter may include a first threshold or indication information indicating the first threshold.

In some examples, the first threshold may be greater than 25 dB. For example, the first threshold may be 30 dB, 31 dB, 35 dB, etc., and it may be understood that a value of the first threshold is not specifically limited in this embodiment of the present disclosure.

In some examples, when the capability value of the in-channel selectivity capability is less than the first threshold, the terminal does not send the first information to the network device.

In this embodiment, when the capability value of the in-channel selectivity capability of the terminal is less than the first threshold, the terminal does not send the first information to the network device. In such case, as the network device does not receive the first information sent by the terminal, so that the network device learns that the terminal has poor in-channel selectivity capability or does not have in-channel selectivity capability, thereby saving network resources.

In some examples, the first parameter may include a parameter determined by the terminal itself, and the terminal may autonomously determine the first threshold.

In some examples, the first parameter may be a parameter agreed in a protocol, and the terminal may determine the first threshold based on the parameter agreed in the protocol.

In some examples, the first parameter may be a parameter provided by the network device, and the terminal may determine the first threshold based on the parameter provided by the network device. For example, the parameter provided by the network device may be carried in a first message sent by the network device to the terminal, and the first message may be, for example, a system message, RRC signaling, or MAC CE (MAC Control Element) signaling.

In an embodiment, the parameter agreed in the protocol includes:
a minimum requirement for the in-channel selectivity capability; and
a second threshold, for determining the first threshold with the minimum requirement for the in-channel selectivity capability.

Herein, the minimum requirement for the in-channel selectivity capability may refer to minimum in-channel selectivity capability required to achieve the specified interference suppression requirement.

In some examples, the minimum requirement for the in-channel selectivity capability may be replaced with the required minimum in-channel selectivity capability, or the minimum required in-channel selectivity capability.

In some examples, a sum of the second threshold and the minimum requirement of the in-channel selectivity capability is used as the first threshold.

For example, assuming that the minimum requirement for the in-channel selectivity capability is 25 dB and the second threshold is 5 dB, the terminal may determine that the first threshold is 30 dB, and if the capability value of the in-channel selectivity capability of the terminal is greater than or equal to 30 dB, the terminal may send the in-channel selectivity capability of the terminal to the network device; or if the capability value of the in-channel selectivity capability of the terminal is less than 30 dB, the terminal may not send the in-channel selectivity capability of the terminal to the network device.

In this embodiment, the first threshold is defined by using the minimum requirement for the in-channel selectivity capability and the second threshold that are agreed in the protocol, so that the terminal can determine whether the in-channel selectivity capability of the terminal is greater than the first threshold, thereby providing a reference basis for whether the terminal sends the first information to the network device. In addition, as the terminal does not need to send the first information to the network device when the in-channel selectivity capability of the terminal is less than the first threshold, network resources can be saved.

In an embodiment, the parameter provided by the network device includes the first threshold.

In some examples, the first threshold provided by the network device may be carried in a first message sent by the network device to the terminal, and the first message may include, for example, a system message, RRC signaling, or MAC CE signaling.

In this embodiment, the terminal may determine, based on the first threshold provided by the network device, whether the in-channel selectivity capability of the terminal is greater than the first threshold, to provide a reference basis for whether the terminal sends the first information to the network device. In addition, as the terminal does not need to send the first information to the network device when the in-channel selectivity capability of the terminal is less than the first threshold, network resources can be saved.

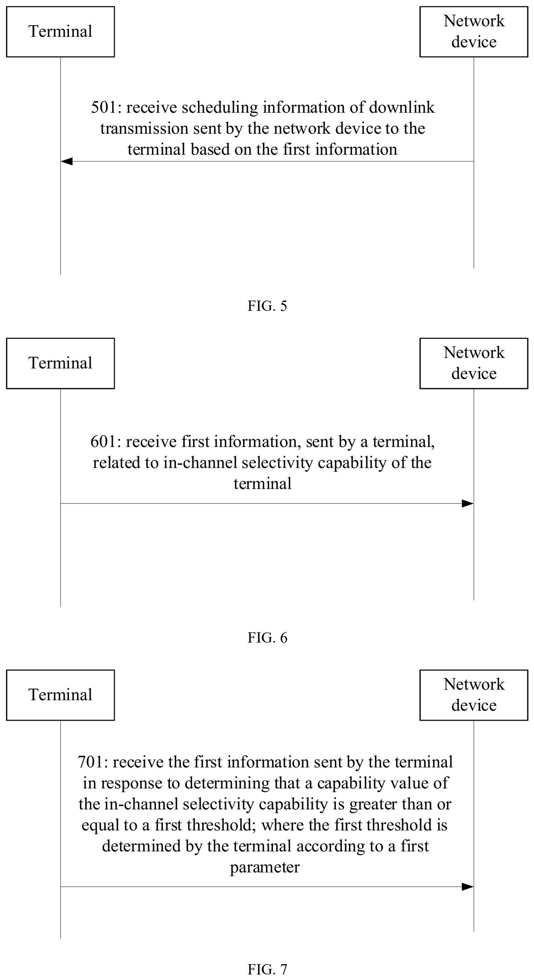

In an embodiment, as shown in FIG. 5, the method may further include a following step 501.

In step 501, receiving scheduling information of downlink transmission sent by the network device to the terminal based on the first information.

In some examples, the scheduling information of the downlink transmission may indicate a resource of the downlink transmission.

For example, the downlink transmission resource includes a time resource and/or a frequency resource used for downlink transmission.

In some examples, the downlink transmission may be applicable to a subband in a frequency band supported by NR. For example, downlink transmission is applicable to a subband in a frequency range (FR) 1 or FR2.

In some examples, the scheduling information of the downlink transmission may be carried in a system message, RRC signaling, or MAC CE signaling sent by the network device.

In some examples, in a case that the in-channel selectivity capability of the terminal is greater than or equal to the first threshold, the terminal receives the scheduling information of the downlink transmission sent by the network device.

In some examples, when the in-channel selectivity capability of the terminal is less than the first threshold, the terminal ignores or does not receive the scheduling information of the downlink transmission sent by the network device.

In some examples, the terminal receives the downlink transmission based on a resource indicated by the scheduling information of the downlink transmission.

In some examples, when the in-channel selectivity capability of the terminal is less than the first threshold, the terminal receives the scheduling information of the uplink transmission sent by the network device. Scheduling information of uplink transmission may indicate an uplink transmission resource. For example, the uplink transmission resource includes a time resource and/or a frequency resource used for uplink transmission.

In this embodiment of the present disclosure, the terminal receives the scheduling information of the downlink transmission sent by the network device based on the first information, so that the terminal can determine whether the terminal is scheduled to receive the downlink transmission, and therefore, the terminal is scheduled to receive the downlink transmission, which helps suppress interference caused by uplink sending of another terminal to downlink receiving of the terminal, thereby improving communication performance.

FIG. 6 is a flowchart of an information transmission method according to an example embodiment. The information transmission method is performed by a network device. As shown in FIG. 6, the information transmission method may include a following step 601.

Step 601, receiving first information, sent by a terminal, related to in-channel selectivity capability of the terminal.

In some examples, the network device may include a base station, and the base station may include, for example, a gNB or an eNB.

In some examples, the terminal may be located in a cell covered by the network device, and the terminal may be various mobile terminals or fixed terminals, for example, may include but is not limited to a mobile phone, a wearable device, or an Internet of Things device.

In some examples, a greater in-channel selectivity capability of the terminal indicates a stronger interference suppression capability of the terminal.

For example, when a first cell in which a terminal is located is in a full-duplex mode, a greater in-channel selectivity capability of the terminal indicates a stronger capability of the terminal to suppress interference from uplink transmission of another terminal in the first cell when the terminal performs downlink transmission.

In some examples, the first information may indicate whether the terminal has in-channel selectivity capability.

In some other examples, the first information may indicate the terminal has in-channel selectivity capability.

In some other examples, the first information may indicate whether the terminal has in-channel selectivity capability with a capability value greater than a first threshold.

For example, the first threshold may be agreed in a protocol or provided by the network device.

In some examples, the network device may receive the first information implicitly sent by the terminal.

In an example, the network device may receive the first information sent by the terminal by using a first resource, where the first resource indicates the first information.

For example, the first resource may include a specific uplink resource preconfigured by the network device for the terminal.

For example, the first resource may include a specific resource used by the terminal to perform random access. The first resource used by the terminal to send the random access message in the random access process is used to indicate the first information related to the in-channel selectivity capability of the terminal.

In an example, the first resource includes at least one of a frequency-domain resource or a time-domain resource.

In an example, the frequency-domain resource includes at least one of a frequency-domain position, a frequency-domain offset, or a frequency hopping parameter.

In an example, the time-domain resource includes at least one of a start symbol location, a number of symbols, or a repetition factor.

In some examples, different first resources indicate different in-channel selectivity capability of terminals.

For example, the first resource may include a first specific resource and a second specific resource, and in-channel selectivity capability of the terminal indicated by the first specific resource is lower than in-channel selectivity capability of the terminal indicated by the second specific resource.

For example, the first specific resource may indicate in-channel selectivity capability with a capability value greater than or equal to a first threshold, and the second specific resource may indicate in-channel selectivity capability with a capability value less than the first threshold.

If the network device receives the uplink transmission sent by the terminal by using the first specific resource, the network device may determine that the capability value of the in-channel selectivity capability of the terminal is greater than or equal to the first threshold; and if the network device receives the uplink transmission sent by the terminal by using the second specific resource, the network device may determine that the capability value of the in-channel selectivity capability of the terminal is less than the first threshold.

In some examples, the network device may receive the first information explicitly sent by the terminal.

For example, the network device may receive a random access message sent by the terminal, where the random access message carries the first information related to the in-channel selectivity capability of the terminal.

In some examples, the network device may receive the first information sent by the terminal when the terminal is in the RRC connected state.

In some examples, the network device may receive the first information sent by the terminal in a case of primary and secondary cell change or cell handover.

In some examples, the network device may send indication information to the terminal, where the indication information indicates the terminal to report the first information.

For example, the indication information may include RRC signaling, medium access control (MAC) control element (CE) signaling, or downlink control information (DCI) signaling.

In the embodiment of the present disclosure, the network device receives the first information related to the in-channel selectivity capability of the terminal sent by the terminal. In this way, the network device can perform more proper scheduling on the terminal based on the first information related to the in-channel selectivity capability of the terminal, thereby improving communication performance.

In an embodiment, the first information includes at least one of:
a first indication, indicating that the terminal has the in-channel selectivity capability;
a second indication, indicating a capability range of the in-channel selectivity capability of the terminal; or
a third indication, indicating a capability value of the in-channel selectivity capability of the terminal.

In some examples, the first information includes the first indication, and the first indication may indicate, by using one bit, whether a capability value of in-channel selectivity capability of the terminal exceeds a first threshold.

For example, the bit taking a value of "1" indicates that the capability value of the in-channel selectivity capability of the terminal is greater than or equal to the first threshold; or the bit taking a value of "0" indicates that the capability value of the in-channel selectivity capability of the terminal is less than the first threshold.

In some examples, when the capability value of the in-channel selectivity capability is greater than or equal to the first threshold, the in-channel selectivity capability may be referred to as a "high in-channel selectivity capability"; and when the capability value of the in-channel selectivity capability is less than the first threshold, the in-channel selectivity capability may be referred to as a "low in-channel selectivity capability".

In some examples, the first information includes the second indication, and the second indication may indicate the capability range of the in-channel selectivity capability of the terminal by using two bits.

For example, when receiving the bit information used as the second indication sent by the terminal, the network device may determine a capability range to which in-channel selectivity capability corresponding to the bit information belongs based on a prestored correspondence between bit information and in-channel selectivity capability ranges. The correspondence may be agreed in a protocol, or the correspondence may be sent by the network device to the terminal in advance, and is used by the terminal to send the second indication.

For example, the two bits taking a value of "00" indicates that the capability range of the in-channel selectivity capability of the terminal is a first capability range, and the two bits taking a value of "01" indicates that the capability range of the in-channel selectivity capability of the terminal is a second capability range, and the two bits taking a value of "10" indicates that the capability range of the in-channel selectivity capability of the terminal is a third capability range. An upper limit of the first capability range is lower than a lower limit of the second capability range, and an upper limit of the second capability range is lower than a lower limit of the third capability range.

In some examples, the first information includes the third indication, and the third indication may include a capability value of in-channel selectivity capability of the terminal. The capability value of the in-channel selectivity capability is an actual in-channel selectivity capability value obtained by testing the terminal.

In the present embodiment of the present disclosure, the network device receives the first indication, the second indication, or the third indication sent by the terminal, so that the network device can determine the in-channel selectivity capability of the terminal based on the indication information sent by the terminal, to more properly schedule the terminal based on the in-channel selectivity capability of the terminal, thereby improving communication performance.

In an embodiment, as shown in FIG. 7, in step 601, receiving the first information related to in-channel selectivity capability of the terminal sent by the terminal may include a following step 701.

In step 701, receiving the first information sent by the terminal in response to determining that a capability value of the in-channel selectivity capability is greater than or equal to a first threshold; where the first threshold is determined by the terminal according to a first parameter.

In some examples, the first parameter may include a first threshold or indication information indicating the first threshold.

In some examples, the first threshold may be greater than 25 dB. For example, the first threshold may be 30 dB, 31 dB, 35 dB, etc., and it may be understood that a value of the first threshold is not specifically limited in this embodiment of the present disclosure.

In some examples, when the capability value of the in-channel selectivity capability is less than the first threshold, the terminal does not send the first information to the network device.

In this embodiment, when the capability value of the in-channel selectivity capability is less than the first threshold, the terminal does not send the first information to the network device. In such case, as the network device does not receive the first information sent by the terminal, the network device learns that the terminal has low in-channel selectivity capability or does not have in-channel selectivity capability, thereby saving network resources.

In some examples, the first parameter may include a parameter determined by the terminal itself, and the terminal may autonomously determine the first threshold.

In some examples, the first parameter may be a parameter agreed in a protocol, and the terminal may determine the first threshold based on the parameter agreed in the protocol.

In some examples, the first parameter may be a parameter provided by the network device, and the terminal may determine the first threshold based on the parameter provided by the network device. For example, the parameter provided by the network device may be carried in a first message sent by the network device to the terminal, and the first message may be, for example, a system message, RRC signaling, or MAC CE signaling.

In an embodiment, the parameter agreed in the protocol includes:
a minimum requirement for the in-channel selectivity capability; and
a second threshold, for determining the first threshold with the minimum requirement for the in-channel selectivity capability.

Herein, the minimum requirement for the in-channel selectivity capability may refer to minimum in-channel selectivity capability required to achieve the specified interference suppression requirement.

In some examples, the minimum requirement for the in-channel selectivity capability may be replaced with the required minimum in-channel selectivity capability, or the minimum required in-channel selectivity capability.

In some examples, a sum of the second threshold and the minimum requirement of the in-channel selectivity capability is used as the first threshold.

For example, assuming that the minimum requirement for the in-channel selectivity capability is 25 dB, the second threshold is 5 dB, and the first threshold is 30 dB, if the capability value of the in-channel selectivity capability of the terminal is greater than or equal to 30 dB, the network device receives the in-channel selectivity capability of the terminal sent by the terminal; or if the capability value of the in-channel selectivity capability of the terminal is less than 30 dB, the network device will not receive the in-channel selectivity capability of the terminal sent by the terminal.

In this embodiment, the first threshold is defined by using the minimum requirement for the in-channel selectivity capability and the second threshold that are agreed in the protocol, so that the terminal can determine whether the in-channel selectivity capability of the terminal is greater than the first threshold, thereby providing a reference basis for whether the terminal sends the first information to the network device. In addition, as the terminal does not need to send the first information to the network device when the in-channel selectivity capability of the terminal is less than the first threshold, network resources can be saved.

In an embodiment, the parameter provided by the network device includes the first threshold.

In some examples, the first threshold provided by the network device may be carried in a first message sent by the network device to the terminal, and the first message may include, for example, a system message, RRC signaling, or MAC CE signaling.

In this embodiment, the network device may provide the first threshold to the terminal, so that the terminal determines whether the in-channel selectivity capability of the terminal is greater than the first threshold, to provide a reference basis for whether the terminal sends the first information to the network device. In addition, as the terminal does not need to send the first information to the network device when the in-channel selectivity capability of the terminal is less than the first threshold, network resources can be saved.

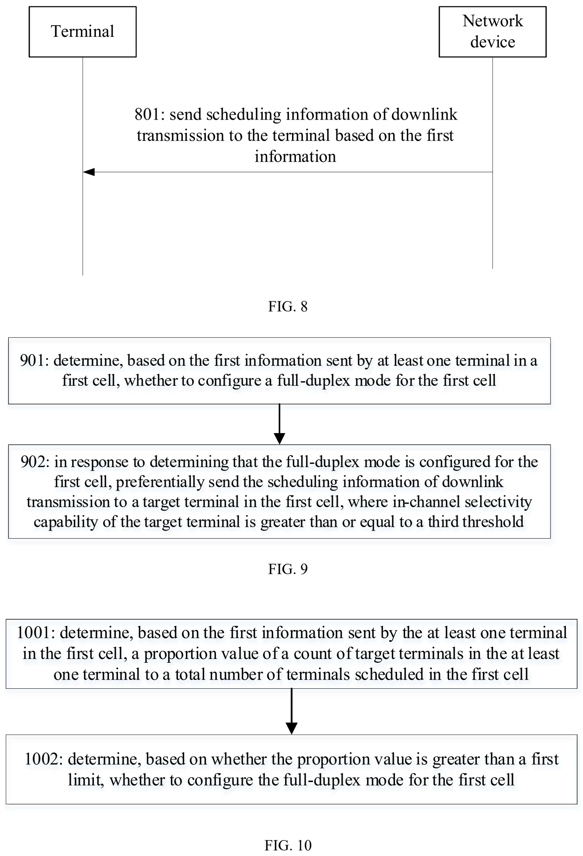

In an embodiment, as shown in FIG. 8, the method may further include a following step 801.

In step 801, sending scheduling information of downlink transmission to the terminal based on the first information.

In some examples, the scheduling information of the downlink transmission may indicate a resource of the downlink transmission.

For example, the downlink transmission resource includes a time resource and/or a frequency resource used for downlink transmission.

In some examples, the downlink transmission may be applicable to a subband in a frequency band supported by NR. For example, downlink transmission is applicable to a subband in FR1 or FR2.

In some examples, the scheduling information of the downlink transmission may be carried in a system message, RRC signaling, or MAC CE signaling sent by the network device.

In some examples, when determining, based on the first information, that the in-channel selectivity capability of the terminal is greater than or equal to the first threshold, the network device sends the scheduling information of the downlink transmission to the terminal.

In some examples, when it is determined, based on the first information, that the in-channel selectivity capability of the terminal is less than the first threshold, the network device does not send the downlink transmission scheduling information to the terminal.

In some examples, when it is determined that the in-channel selectivity capability of the terminal is less than the first threshold, the network device sends the scheduling information of the uplink transmission to the terminal. Scheduling information of uplink transmission may indicate an uplink transmission resource. For example, the uplink transmission resource includes a time resource and/or a frequency resource used for uplink transmission.

In this embodiment of the present disclosure, the network device sends the scheduling information of the downlink transmission to the terminal based on the first information, so that the terminal can determine whether the terminal is scheduled to receive the downlink transmission, and therefore, the terminal is scheduled to receive the downlink transmission, which helps suppress interference caused by uplink sending of another terminal to downlink receiving of the terminal, thereby improving communication performance.

In an embodiment, as shown in FIG. 9, in step 801, sending the scheduling information for downlink transmission to the terminal based on the first information may include following steps 901 and 902.

In step 901, determining, based on the first information sent by at least one terminal in a first cell, whether to configure a full-duplex mode for the first cell.

In this embodiment, the first cell may be a cell that supports a full-duplex mode within coverage of the network device.

In some examples, statistics collection may be performed on terminals in the first cell based on the first information sent by the at least one terminal in the first cell to obtain a statistical result, and whether to configure the full-duplex configuration for the first cell is determined based on the statistical result of the terminals in the first cell.

For example, the first information is sent by the terminal when the capability value of the in-channel selective capability of the terminal is greater than or equal to the first threshold, and the network device may collect statistics on terminals in the first cell based on a count of terminals that send the first information and a total number of terminals in the first cell, and determine, based on the statistical result of the terminals in the first cell, whether to configure the full-duplex configuration for the first cell.

In some examples, when it is determined that the in-channel selectivity capabilities of all the terminals in the first cell are less than the first threshold, uplink scheduling is performed on all the terminals in the first cell. In this case, it can be determined not to configure the full duplex mode for the first cell.

In step 902, in response to determining that the full-duplex mode is configured for the first cell, preferentially sending the scheduling information of downlink transmission to a target terminal in the first cell, where in-channel selectivity capability of the target terminal is greater than or equal to a third threshold.

In some examples, the third threshold may be same as or different from the first threshold, for example, the third threshold is greater than or equal to the first threshold.

In a case that the full-duplex mode is configured for the first cell, the scheduling information of the downlink transmission is sent to target terminals with priority over non-target terminals in the first cell. The non-target terminals may be terminals other than the target terminals in the first cell.

In this embodiment, the scheduling information of the downlink transmission is preferentially sent to the target terminal in the first cell. The target terminal may be a terminal with a higher in-channel selectivity capability, and scheduling information of downlink transmission is preferentially sent to the terminal with the higher in-channel selectivity capability, and the terminal with the higher in-channel selectivity capability may be preferentially scheduled to receive downlink transmission.

Because a terminal with a relatively high selectivity capability in a channel can better suppress interference caused by uplink transmission of another terminal to downlink reception of the terminal, when the full-duplex mode is configured for the first cell, scheduling information for downlink transmission is preferentially sent to the target terminal in the first cell, so that the network can better schedule the terminal based on the terminal capability, thereby maximizing performance of the full-duplex mode.

In an embodiment, as shown in FIG. 10, in step 901, determining, based on the first information sent by at least one terminal in the first cell, whether to configure the full-duplex mode for the first cell may include following steps 1001 and 1002.

Step 1001, determining, based on the first information sent by the at least one terminal in the first cell, a proportion value of a count of target terminals in the at least one terminal to a total number of terminals scheduled in the first cell.

In some examples, the first information is sent by the terminal when the capability value of the in-channel selective capability of the terminal is greater than or equal to the first threshold, and the network device may determine a count of target terminals from the at least one terminal that sends the first information, and determine a proportion of target terminals to all terminals scheduled in the first cell based on the count of target terminals and the total number of terminals scheduled in the first cell.

In step 1002, determining, based on whether the proportion value is greater than a first limit, whether to configure the full-duplex mode for the first cell.

In some examples, the first threshold is preset by the network device, for example, the first threshold may be 50%, 60%, or another value.

In some examples, if the proportion value is greater than a first limit, it is determined to configure the full-duplex mode for the first cell; and if the proportion value is less than or equal to the first limit, it is determined not to configure the full-duplex mode for the first cell.

In this embodiment, whether to configure the full-duplex mode for the first cell is determined based on whether the proportion value of the target terminal to all terminals scheduled in the first cell is greater than the first threshold, so that reliability of configuring the full-duplex mode for the first cell can be improved.

In order to further explain any embodiment of the present disclosure, several specific embodiments are provided below.

An embodiment of the present disclosure provides an information transmission method, where a terminal reports to a base station whether the terminal has a high in-channel selectivity capability, and the base station preferentially configures downlink transmission for the terminal having the high in-channel selectivity capability in a full-duplex mode according to the capability reported by the terminal.

In this embodiment of the present disclosure, the high in-channel selectivity capability may be understood as an in-channel selectivity capability whose capability value is greater than a first threshold.

In some examples, the first threshold may be greater than 25 dB. For example, the first threshold may be 30 dB, 31 dB, 35 dB, etc., and it may be understood that a value of the first threshold is not specifically limited in this embodiment of the present disclosure.

An embodiment of the present disclosure provides an information transmission method, including:
a terminal reports in-channel selective capability with a capability value greater than a first threshold to a base station.

In some embodiments, the base station preferentially configures, in the full-duplex mode based on the in-channel selectivity capability reported by the terminal, downlink transmission for the terminal having the in-channel selectivity capability with the capability value greater than the first threshold.

In the embodiments of the present disclosure, compared with a terminal with lower in-channel selectivity capability, a terminal with higher in-channel selectivity capability is more suitable for being scheduled for downlink transmission when a cell is in a full-duplex mode, that is, when other terminals perform uplink transmission, the terminal can be used to receive downlink transmission at the same time. In this way, the network can better schedule the full-duplex mode based on the terminal capability, thereby maximizing full-duplex performance.

In some examples, the terminal may report, to the base station by using two bits, the capability range to which the in-channel selectivity capability of the terminal belongs.

For example, if the value of the two bits is "00", it indicates that the in-channel selectivity capability of the terminal is greater than or equal to 25 dB and less than 30 dB; if the value of the two bits is "01", it indicates that the in-channel selectivity capability of the terminal is greater than or equal to 30 dB and less than 35 dB; if the value of the two bits is "10", it indicates that the in-channel selectivity capability of the terminal is greater than or equal to 35 dB and less than 40 dB; if the value of the two bits is "11", it indicates that the in-channel selectivity capability of the terminal is greater than or equal to 40 dB, as shown in Table 1.

**Table 1: correspondence between bit information and in-channel selectivity capability range**

| Bit Information | In-Channel Selective Capability (ICS) |
|---|---|
| 00 | 25dB≤ICS<30dB |
| 01 | 30dB≤ICS<35dB |
| 10 | 35dB≤ICS<40dB |
| 11 | 40dB≤ICS |

It should be noted that the above examples are merely illustrative and are not intended to limit the embodiments of the present disclosure, and the correspondence between the bit information and the in-channel selectivity capability range may also be other correspondences than the above examples.

An embodiment of the present disclosure provides an information transmission method, including:
when reporting high in-channel selectivity capability, a terminal indicates, by using 1-bit information, whether the terminal has the high in-channel selectivity capability.

The high in-channel selectivity capability may refer to that actual in-channel selectivity capability of the terminal is greater than a given threshold compared with a minimum requirement defined in a standard. The minimum requirement defined in the standard may be, for example, 25 dB, and the specified threshold may be, for example, greater than or equal to 5 dB. That is, only when the actual in-channel selectivity capability measured by the terminal is greater than 30 dB or more, the terminal may report the high in-channel selectivity capability.

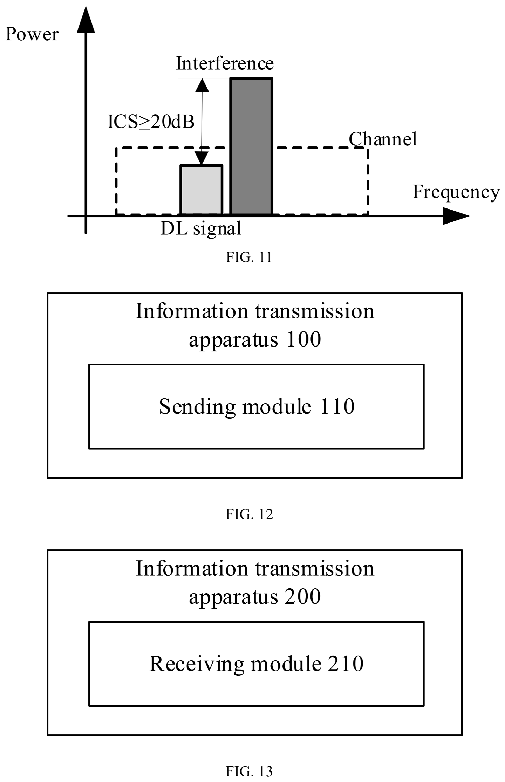

As shown in FIG. 11, a definition of the ICS of the terminal is shown. Both a DL signal and interference (interference) exist in a same channel, and the ICS may be a difference value between power of a valid signal and power of an interference signal for receiving the DL signal by the terminal.

An embodiment of the present disclosure provides an information transmission method, including:
a terminal determines whether to report in-channel selectivity capability of the terminal according to whether the in-channel selectivity capability of the terminal is higher than a threshold delivered by a base station.

In some embodiments, the base station determines to preferentially allocate downlink transmission to the target terminal according to the in-channel selectivity capability reported by the terminal.

For example, if the threshold delivered by the base station is 30 dB, the terminal reports the in-channel selection capability of the terminal only when the in-channel selection capability of the terminal is greater than 30 dB; otherwise, the terminal does not need to report the in-channel selection capability.

An embodiment of the present disclosure provides an information transmission method, including:
a base station requires a terminal to report high in-channel selectivity capability, and the base station determines whether to configure a full-duplex mode according to a proportion of terminals with the high in-channel selectivity capability to all scheduled terminals.

If the base station schedules *N* terminals, and there are *n* terminals with the high in-band selectivity capability, the base station determines, based on whether *n*/*N* is greater than 50% (50% is a preset proportion), whether to configure the cell as the full-duplex mode, and preferentially configures the terminal with the high selectivity capability for the downlink transmission when the cell is configured as the full-duplex mode.

In the embodiments of the present disclosure, some or all of the steps and optional implementations thereof may be arbitrarily combined with some or all of the steps in other embodiments, or may be arbitrarily combined with optional implementations of other embodiments.

The following are apparatus embodiments of the present disclosure, which may be used to perform corresponding method embodiments of the present disclosure. For details not disclosed in the apparatus embodiments of the present disclosure, reference can be made to corresponding method embodiments of the present disclosure.

FIG. 12 is a structural diagram of an information transmission apparatus according to an example embodiment. As shown in FIG. 12, the information transmission apparatus is applied to a terminal, and the information transmission apparatus 100 may include:
a sending module 110, configured to send first information related to in-channel selectivity capability of the terminal to a network device.

In an embodiment, the first information includes any one of:
a first indication, indicating that the terminal has the in-channel selectivity capability;
a second indication, indicating a capability range of the in-channel selectivity capability of the terminal; and
a third indication, indicating a capability value of the in-channel selectivity capability of the terminal.

In an embodiment, sending the first information related to in-channel selectivity capability of the terminal to the network device includes:
in response to determining that a capability value of the in-channel selectivity capability is greater than or equal to a first threshold, sending the first information to the network device; where the first threshold is determined by the terminal according to a first parameter.

In an embodiment, the first parameter includes any one of:
a parameter determined by the terminal;
a parameter agreed in a protocol; and
a parameter provided by the network device.

In an embodiment, the parameter agreed in the protocol includes:
a minimum requirement for the in-channel selectivity capability; and
a second threshold, for determining the first threshold with the minimum requirement for the in-channel selectivity capability.

In an embodiment, the parameter provided by the network device includes the first threshold.

In an embodiment, the apparatus further includes:
a receiving module, configured to receive scheduling information of downlink transmission sent by the network device to the terminal based on the first information.

FIG. 13 is a structural diagram of an information transmission apparatus according to an example embodiment. As shown in FIG. 13, the information transmission apparatus is applied to a network device, and the information transmission apparatus 200 may include:
a receiving module 210, configured to receive first information, sent by a terminal, related to in-channel selectivity capability of the terminal.

In an embodiment, the first information includes any one of:
a first indication, indicating that the terminal has the in-channel selectivity capability;
a second indication, indicating a capability range of the in-channel selectivity capability of the terminal; and
a third indication, indicating a capability value of the in-channel selectivity capability of the terminal.

In an embodiment, sending the first information related to in-channel selectivity capability of the terminal to the network device includes:
in response to determining that a capability value of the in-channel selectivity capability is greater than or equal to a first threshold, sending the first information to the network device; where the first threshold is determined by the terminal according to a first parameter.

In an embodiment, the first parameter includes any one of:
a parameter determined by the terminal;
a parameter agreed in a protocol; and
a parameter provided by the network device.

In an embodiment, the parameter agreed in the protocol includes:
a minimum requirement for the in-channel selectivity capability; and
a second threshold, for determining the first threshold with the minimum requirement for the in-channel selectivity capability.

In an embodiment, the parameter provided by the network device includes the first threshold.

In an embodiment, the apparatus further includes:
a sending module, configured to send scheduling information of downlink transmission to the terminal based on the first information.

In an embodiment, the sending module is configured to:
determining, based on the first information sent by at least one terminal in a first cell, whether to configure a full-duplex mode for the first cell; and
in response to determining that the full-duplex mode is configured for the first cell, preferentially sending the scheduling information of downlink transmission to a target terminal in the first cell, where in-channel selectivity capability of the target terminal is greater than or equal to a third threshold.

In an embodiment, the sending module is configured to:
determining, based on the first information sent by the at least one terminal in the first cell, a proportion value of a count of target terminals in the at least one terminal to a total number of terminals scheduled in the first cell; and
determining, based on whether the proportion value is greater than a first limit, whether to configure the full-duplex mode for the first cell.

An embodiment of the present disclosure provides a communication system, where the communication system may include:
a terminal, configured to send first information related to in-channel selectivity capability of the terminal to a network device.

In an embodiment, the first information includes any one of:
a first indication, indicating that the terminal has the in-channel selectivity capability;
a second indication, indicating a capability range of the in-channel selectivity capability of the terminal; and
a third indication, indicating a capability value of the in-channel selectivity capability of the terminal.

In an embodiment, sending the first information related to in-channel selectivity capability of the terminal to the network device includes:
in response to determining that a capability value of the in-channel selectivity capability is greater than or equal to a first threshold, sending the first information to the network device; where the first threshold is determined by the terminal according to a first parameter.

In an embodiment, the first parameter includes any one of:
a parameter determined by the terminal;
a parameter agreed in a protocol; and
a parameter provided by the network device.

In an embodiment, the parameter agreed in the protocol includes:
a minimum requirement for the in-channel selectivity capability; and
a second threshold, for determining the first threshold with the minimum requirement for the in-channel selectivity capability.

In an embodiment, the parameter provided by the network device includes the first threshold.

In an embodiment, the terminal is configured to:
receiving scheduling information of downlink transmission sent by the network device to the terminal based on the first information.

In an embodiment, the network device is configured to receive first information related to in-channel selectivity capability of the terminal.

In an embodiment, the network device is configured to:
determining, based on the first information sent by at least one terminal in a first cell, whether to configure a full-duplex mode for the first cell; and
in response to determining that the full-duplex mode is configured for the first cell, preferentially sending the scheduling information of downlink transmission to a target terminal in the first cell, where in-channel selectivity capability of the target terminal is greater than or equal to a third threshold.

In an embodiment, the network device is configured to:
determining, based on the first information sent by the at least one terminal in the first cell, a proportion value of a count of target terminals in the at least one terminal to a total number of terminals scheduled in the first cell; and
determining, based on whether the proportion value is greater than a first limit, whether to configure the full-duplex mode for the first cell.

An embodiment of the present disclosure provides a communication device, which may include:
a memory for storing a processor-executable instruction;
one or more processors, respectively connected to the memory;

The one or more processors are configured to perform the information transmission method provided in any one of the foregoing embodiments.

The one or more processors may include various types of storage media, which are non-transitory computer storage media capable of continuing to memorize information stored thereon after the communication device is powered down.

Herein, the communication device includes a terminal or a network device, and the network device may be an access network device, for example, a base station.

The one or more processors may be connected to the memory by using a bus or the like, and is configured to read an executable program stored in the memory, for example, the information transmission method provided in any one of the foregoing embodiments.

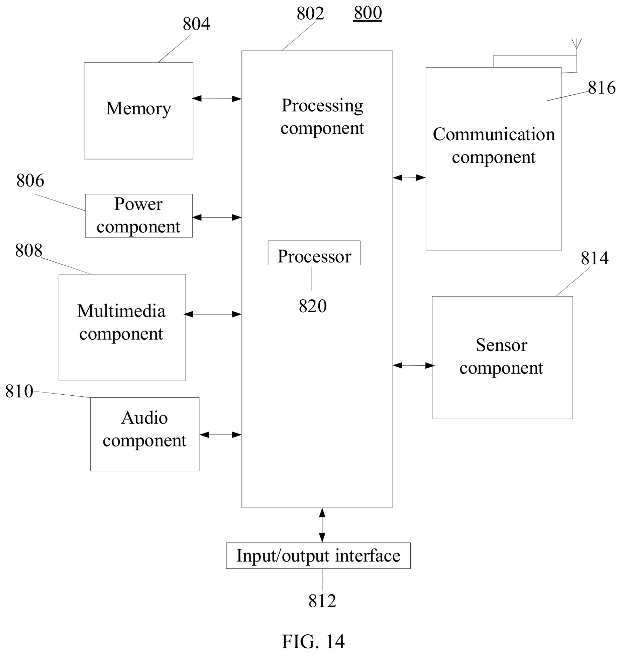

FIG. 14 is a block diagram of a UE 800 according to an example embodiment. For example, the UE 800 may be a mobile phone, a computer, a digital broadcast user equipment, a messaging device, a gaming console, an Internet of Things device, a tablet device, a medical device, a fitness device, a personal digital assistant, etc.

Referring to FIGS. 14, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In an embodiment, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or slide action, but also detect a duration and pressure associated with the touch or slide operation. In an embodiment, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In an embodiment, the audio component 810 further includes a speaker to output audio signals.

The I/O interface 812 provides an interface between the processing component 802 and peripheral interface modules, such as a keyboard, a click wheel, buttons, and the like. These buttons may include, but are not limited to, home buttons, volume buttons, start buttons, and lock buttons.

The sensor component 814 includes one or more sensors to provide status assessments of various aspects of the UE 800. For instance, the sensor component 814 may detect an open/closed status of the device 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without requiring any physical contact. The sensor component 814 may also include a light sensor, such as a CMOS or CCD image sensor, for use in imaging applications. In an embodiment, the sensor component 814 may also include an accelerometer sensor, a gyroscope sensor, a magnetic sensor, a pressure sensor, or a temperature sensor.

The communication component 816is configured to facilitate communication, wired or wirelessly, between the UE 800 and other devices. The UE 800 may access a wireless network based on a communication standard, such as WiFi, 4G or 5G, or a combination thereof. In an example embodiment, the communication component 816 receives a broadcast signal or broadcast associated information from an external broadcast management system via a broadcast channel. In an example embodiment, the communication component 816 further includes a near field communication (NFC) module to facilitate short-range communication. For example, NFC modules may be implemented based on radio frequency identification (RFID) technology, infrared data association (IrDA) technology, ultra-wideband (UWB) technology, Bluetooth (BT) technology, and other technologies.

In an example embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the information transmission method according to any one of the above embodiments.

In example embodiments, there is also provided a non-transitory computer-readable storage medium including an instruction, such as included in the memory 804, executable by the processor 820 in the UE 800, for implementing the information transmission method provided in any one of the foregoing embodiments. For example, the non-transitory computer-readable storage medium may be a ROM (read-only memory), a RAM (random access memory), CD-ROM (compact disc read-only memory), magnetic tape, floppy disk, optical data storage device, or the like.

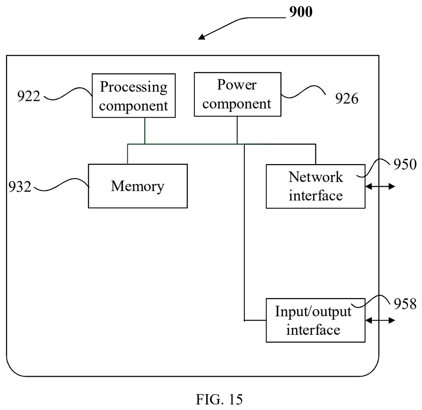

As shown in FIG. 15, an embodiment of the present disclosure shows a structure of a communication device. For example, the communication device 900 may be provided as a network device. The communication device may be an access network device, for example, a base station.

Referring to FIGS. 15, the communication device 900 includes a processing component 922, which further includes one or more processors, and memory resources represented by a memory 932 for storing instructions executable by the processing component 922, such as application programs. The application program stored in the memory 932 may include one or more modules each corresponding to a set of instructions. In addition, the processing component 922 is configured to execute instructions to perform any method applied to the network device, for example, the information transmission method provided in any of the foregoing embodiments.

The communication device 900 may further include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS XTM, UnixTM, LeuxTM, FreeBSDTM, or the like.

In a non-conflict basis, each step in a certain embodiment or embodiment can be implemented as an independent embodiment, and the steps can be arbitrarily combined, for example, the solution after removing part of the steps in a certain embodiment or embodiment can also be implemented as an independent embodiment, and the order of the steps in a certain embodiment or embodiment can be arbitrarily exchanged, in addition, the optional or optional examples in a certain embodiment or embodiment can be arbitrarily combined; in addition, the embodiments or embodiments can be arbitrarily combined, for example, part or all of the steps in different embodiments or embodiments can be arbitrarily combined, and a certain embodiment or embodiment can be arbitrarily combined with the optional or optional examples of other embodiments or embodiments.

Other embodiments of the present disclosure will be apparent to those skilled in the art from consideration of the specification and practice of the present disclosure disclosed herein. The present disclosure is intended to cover any variations, uses, or adaptations of the present disclosure following the general principles thereof and including such departures from the present disclosure as come within known or customary practice in the art. It is intended that the specification and examples be considered as examples only, with a true scope and spirit of the disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

## Claims

1. An information transmission method, performed by a terminal, comprising:
sending first information related to in-channel selectivity capability of the terminal to a network device.

2. The method according to claim 1, wherein the first information comprises any one of:
a first indication, indicating that the terminal has the in-channel selectivity capability;
a second indication, indicating a capability range of the in-channel selectivity capability of the terminal; and
a third indication, indicating a capability value of the in-channel selectivity capability of the terminal.

3. The method according to claim 1 or 2, wherein sending the first information related to in-channel selectivity capability of the terminal to the network device comprises:
in response to determining that a capability value of the in-channel selectivity capability is greater than or equal to a first threshold, sending the first information to the network device; wherein the first threshold is determined by the terminal according to a first parameter.

4. The method according to claim 3, wherein the first parameter comprises any one of:
a parameter determined by the terminal;
a parameter agreed in a protocol; and
a parameter provided by the network device.

5. The method according to claim 4, wherein the parameter agreed in the protocol comprises:
a minimum requirement for the in-channel selectivity capability; and
a second threshold, for determining the first threshold with the minimum requirement for the in-channel selectivity capability.

6. The method according to claim 4, wherein the parameter provided by the network device comprises the first threshold.

7. The method according to any one of claims 1-6, wherein the method further comprises:
receiving scheduling information of downlink transmission sent by the network device to the terminal based on the first information.

8. An information transmission method, performed by a network device, comprising:
receiving first information, sent by a terminal, related to in-channel selectivity capability of the terminal.

9. The method according to claim 8, wherein the first information comprises at least one of:
a first indication, indicating that the terminal has the in-channel selectivity capability;
a second indication, indicating a capability range of the in-channel selectivity capability of the terminal; or
a third indication, indicating a capability value of the in-channel selectivity capability of the terminal.

10. The method according to claim 8 or 9, wherein receiving the first information, sent by the terminal, related to in-channel selectivity capability of the terminal comprises:
receiving the first information sent by the terminal in response to determining that a capability value of the in-channel selectivity capability is greater than or equal to a first threshold; wherein the first threshold is determined by the terminal according to a first parameter.

11. The method according to claim 10, wherein the first parameter comprises any one of:
a parameter determined by the terminal;
a parameter agreed in a protocol; and
a parameter provided by the network device.

12. The method according to claim 11, wherein the parameter agreed in the protocol comprises:
a minimum requirement for the in-channel selectivity capability; and
a second threshold, for determining the first threshold with the minimum requirement for the in-channel selectivity capability.

13. The method according to claim 11, wherein the parameter provided by the network device comprises the first threshold.

14. The method according to any one of claims 8-13, wherein the method further comprises:
sending scheduling information of downlink transmission to the terminal based on the first information.

15. The method according to claim 14, wherein sending the scheduling information of downlink transmission to the terminal based on the first information comprises:
determining, based on the first information sent by at least one terminal in a first cell, whether to configure a full-duplex mode for the first cell; and
in response to determining that the full-duplex mode is configured for the first cell, preferentially sending the scheduling information of downlink transmission to a target terminal in the first cell, wherein in-channel selectivity capability of the target terminal is greater than or equal to a third threshold.

16. The method according to claim 15, wherein determining, based on the first information sent by at least one terminal in the first cell, whether to configure the full-duplex mode for the first cell comprises:
determining, based on the first information sent by the at least one terminal in the first cell, a proportion value of a count of target terminals in the at least one terminal to a total number of terminals scheduled in the first cell; and
determining, based on whether the proportion value is greater than a first limit, whether to configure the full-duplex mode for the first cell.

17. An information transmission apparatus, applied to a terminal, comprising:
a sending module, configured to send first information related to in-channel selectivity capability of the terminal to a network device.

18. An information transmission apparatus, applied to a network device, comprising:
a receiving module, configured to receive first information, sent by a terminal, related to in-channel selectivity capability of the terminal.

19. A communication system, comprising:
a terminal, configured to perform the information transmission method according to any one of claims 1-7; and
a network device, configured to perform the information transmission method according to any one of claims 8-16.

20. A communication device, comprising one or more processors, a memory, and an executable program stored in the memory and executable by the one or more processors, wherein when executing the executable program, the one or more processors are caused to perform the information transmission method according to any one of claims 1-7 or the information transmission method according to any one of claims 8-16.

21. A computer storage medium, wherein the computer storage medium stores an executable program, and when the executable program is executed by one or more processors, the information transmission method according to any one of claims 1-7 or any one of claims 8-16 is implemented.
